# DEMANDE DE BREVET EUROPEEN

(11) **EP 2 333 450 A2**
(43) Date de publication de la demande: **15.06.2011**
(21) Numéro de dépôt: 10192333.2
(22) Date de dépôt: 24.11.2010
(51) Int. Cl.: F24J 2/04, F24J 2/52, H01L 31/042

(54) **Tuile solaire**

(30) Priorité: 24.11.2009 CH 18032009
(71) Demandeur: Perret, Patrick, 2525 Le Landeron (CH)
(72) Inventeur: Perret, Patrick, 2525 Le Landeron (CH)
(74) Mandataire: P&TS Patents & Technology Surveys SA

(57) **Abrégé**

La présente invention concerne une tuile plate avec une forme hexagonale pour une structure de toit et comprenant un capteur solaire (2) et un joint (31), et un arrangement des tuiles qui garantit l'étanchéité pour la structure de toit.

## Description

### Domaine technique

La présente invention concerne une tuile pour une structure de toit et comprenant un capteur solaire, et un arrangement desdites tuiles qui garantit l'étanchéité pour ladite structure de toit.

### Etat de la technique

L'utilisation de tuiles avec un capteur solaire est bien connue : on peut recouvrir une structure de toit et en même temps profiter de l'énergie solaire captée. L'intégration du capteur sur la tuile, par exemple par collage, permet en outre de répondre à des besoins esthétiques : dans plusieurs localités, par exemple, les bâtiments sont assujettis à des normes architecturales et ne peuvent pas utiliser des panneaux simplement placés sur un arrangement des tuiles préexistant.

L'arrangement pour une structure de toit comprenant des tuiles solaires doit permettre d'utiliser de façon efficace les capteurs solaires, en évitant des ombres couvrant le capteur qui pourraient être générées par exemple par les ondes des tuiles ondulées. Un tel arrangement doit surtout permettre de rendre la toiture parfaitement étanche, afin de protéger tous les éléments techniques et d'assurer la fiabilité de l'installation.

Les tuiles solaires sont habituellement montées côté à côté sur les toits. Elles peuvent aussi se chevaucher comme des tuiles classiques : cette pose assure esthétisme et longévité, car l'étanchéité est meilleure que celle de tuiles montées côté à côté. Il existe des tuiles solaires plates avec une forme rectangulaire qui se superposent l'une sur l'autre. Elles possèdent une bande autocollante unilatérale qui, une fois collé le long des arêtes des tuiles, assure seulement l'étanchéité latérale. Pour garantir l'étanchéité aux jonctions entre les diverses tuiles superposées un joint moulé avec une forme compliquée est utilisé.

Il existe aussi des tuiles ondulées de forme rectangulaire ou carrée réalisées en brique et de grandes dimensions, avec un panneau photovoltaïque posé au centre plat de la tuile, qui se superposent l'une sur l'autre. L'arrangement garantit une bonne étanchéité, mais l'ombre générée par les parties en forme d'onde de la tuile qui se superposent ne permet pas d'utiliser le panneau photovoltaïque de façon efficace. En outre, les tuiles étant non plates, l'espace entre les tuiles de différentes rangées doit être précis, ce qui est difficile si la charpente n'est pas plate.

### Bref résumé de l'invention

Un but de la présente invention est garantir l'étanchéité pour une structure de toit avec un arrangement des tuiles solaires superposées.

Un autre but est de permettre un montage facile de tuiles même sur une charpente non plate.

Un autre but est d'améliorer le rendement des capteurs solaires en évitant les ombres.

Selon l'invention, ces buts sont atteints notamment au moyen d'une tuile plate en forme hexagonale obtenue à partir d'un rectangle ou d'un carré en rognant de la même façon deux coins opposés. Sur la surface supérieure de la tuile il y a un capteur solaire qui peut être photovoltaïque ou thermique. Un joint de forme très simple, par exemple avec une section en forme de « L », circulaire, carré ou rectangulaire est posé sur la surface inférieure de tuile. L'arrangement avec au moins trois tuiles de ce type, qui se superposent comme on le verra plus loin, ainsi que la présence d'un seul simple, joint garantissent l'étanchéité.

Cette solution présente notamment l'avantage d'une superposition des tuiles solaires plus efficace par rapport à la superposition des tuiles plates rectangulaires, parce que les chevauchements garantissent une meilleure étanchéité. On n'a pas donc besoin d'une bande autocollante pour l'étanchéité latérale et d'un joint avec une forme compliquée pour l'étanchéité aux jonctions, comme dans le cas de tuiles rectangulaires. Un seul joint de forme simple, ainsi que les chevauchements, sont suffisants pour garantir l'étanchéité.

Puisque la tuile est plate, cette solution ne présente pas les problèmes d'ombres caractéristiques des tuiles ondulées. En outre, comme on l'a déjà vu, l'utilisation de tuiles plates permet de s'affranchir des problèmes de pose précise et d'espacement régulier entre les tuiles qui sont difficiles à garantir avec des tuiles non plates et si la charpente n'est pas plate.

### Brève description des figures

Des exemples de mise en oeuvre de l'invention sont indiqués dans la description illustrée par les figures annexées dans lesquelles :
La figure 1 illustre la face supérieure d'une tuile ayant une forme hexagonale obtenue à partir d'un carré en rognant de la même façon deux coins opposés, avec un capteur solaire, un trou et des éléments de connexion électrique mâles.
La figure 2 illustre la face inférieure d'une tuile ayant une forme hexagonale obtenue à partir d'un carré en rognant de la même façon deux coins opposés, avec un trou, un joint en forme d'une « L » et des éléments de connexion électrique femelles.
La figure 3 montre un vue de coté de deux tuiles adjacentes, avec chacune un boîtier placé sur la surface inférieure qui permet une connexion électrique avec des fils entre les deux boîtiers.
La figure 4 montre un possible procédé pour obtenir un arrangement pour une structure de toit de quatre tuiles superposées de façon à garantir l'étanchéité du toit. On dépose sur la tuile 10a les deux tuiles 10b, 10c dans un même plan, comme montré dans les arrangements 51 et 52. La partie adjacente des deux tuiles 10b, 10c est recouverte par une partie d'une tuile 10d dans un plan supérieur.
La figure 5 montre un autre arrangement possible pour une structure de toit de quatre tuiles superposées de façon à garantir l'étanchéité du toit.
La figure 6 montre une tuile selon l'invention et deux cadres sur les quatre bords autres que les petits bords provenant du coin rogné.
La figure 7 illustre une vue de section de deux tuiles superposées à l'aide d'un premier cadre avec une section en forme de « H » et d'un deuxième cadre avec une section en forme de «S».
La figure 8 illustre une vue de section d'un mode de réalisation du premier cadre avec une section en forme de « H ».
La figure 9 illustre une vue de section d'un mode de réalisation du deuxième cadre avec une section en forme de « S ».

### Exemple(s) de mode de réalisation de l'invention

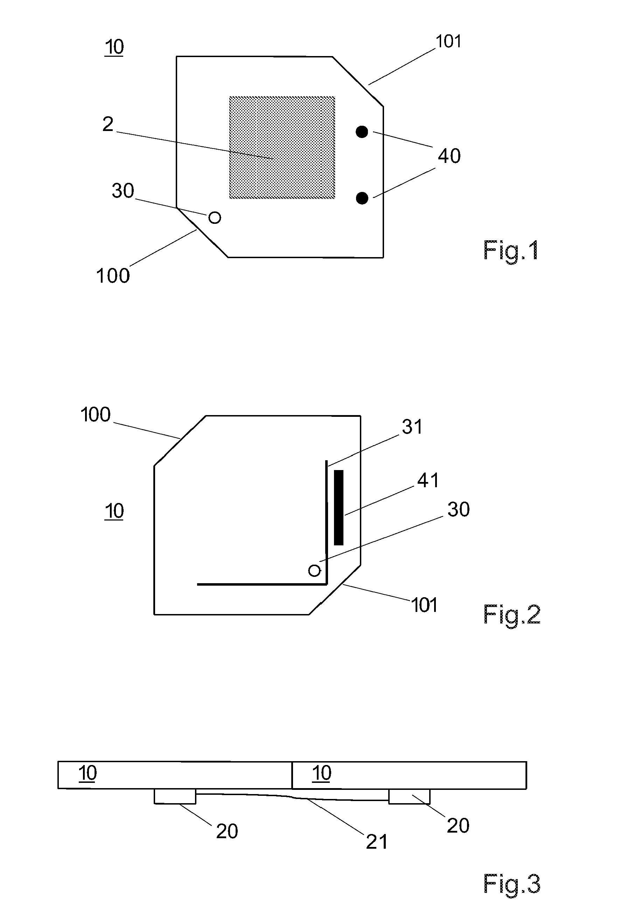

La présente invention concerne une tuile plate avec une forme hexagonale 10 pour une structure de toit et comprenant un capteur solaire 2. La forme hexagonale est obtenue à partir d'un rectangle avec deux coins opposés 100, 101 rognés de la même façon. Dans une variante de l'invention, la forme hexagonale est obtenue à partir d'un carré avec deux coins opposés 100, 101 rognés (figure 1).

La forme des tuiles peut être obtenue à partir d'une tuile initialement rectangulaire ou carrée dont les coins sont ensuite coupés (rognés), ou directement à la bonne forme. Les tuiles ont ainsi 6 coins; deux coins opposés sont à angle droit et les quatre autres présentent un angle de 135°. Les deux bords entre chaque paire de coins à 135° sont plus courts que les quatre autres bords.

La longueur d'un côté du carré est par exemple de 0,9 m, de préférence entre 0,5 m et 1,5 m. Dans une variante de l'invention, la longueur d'un côté des cellules carrées du capteur photovoltaïque est de 0,125 m. Les tuiles obtenues à partir d'un rectangle ayant un capteur photovoltaïque peuvent avoir, par exemple, une longueur qui est différente de la largeur par un multiple de 0,125, parce que ledit capteur solaire a, par exemple, une ou plus rangée de cellules solaire en plus en longueur.

Le capteur solaire peut être photovoltaïque ou thermique. Dans une variante de l'invention on peut utiliser sur la même structure de toit à la fois des tuiles avec un capteur photovoltaïque et des tuiles avec un capteur thermique. Le capteur photovoltaïque peut être collé sur ladite tuile. La tuile peut par exemple être réalisée en plastique, par découpage à partir d'une tôle plastique de grande dimension.

Le capteur solaire comprend un boîtier 20 placé sur la surface inférieure de la tuile qui permet une connexion électrique avec des fils 21 aux boîtiers des tuiles adjacentes (figure 3). La connexion en série des capteurs solaires d'une même rangée permet d'accéder sans difficulté à l'installation électrique des capteurs solaires.

La tuile comprend aussi des éléments de connexion électrique mâles 40 (figure 1) sur la surface supérieure et femelles 41 (figure 2) sur la surface inférieure de ladite tuile. Les éléments males d'une tuile peuvent être insérés dans les connecteurs femelles d'une tuile adjacente. Les connecteurs peuvent, dans une variante, être du type « plug » ou « discrete wire ».

La tuile est munie sur sa surface inférieure d'un joint 31 en forme de « L », carré ou rectangulaire (figure 2). Le joint garantit l'étanchéité entre les diverses tuiles superposées. Dans une variante il peut être réalisé en caoutchouc. Il peut être collé sous la tuile et/ou glissé dans une gorge usinée ou obtenue par moulage sous la tuile. Grâce à la forme géométrique de la tuile, la superposition des tuiles adjacentes permette des chevauchements plus grands que ceux des tuiles ayant une autre forme, par exemple rectangulaire. Un seul joint, par exemple en forme de « L », est alors suffisant pour garantir l'étanchéité. On n'a pas donc besoin par exemple d'ajouter une bande autocollante ou un joint avec une forme compliquée aux jonctions des quatre tuiles parce dans l'arrangement proposé, comme on verra plus loin, elles se superposent de façon à ce que de l'eau ne peut pas passer à travers les jonctions.

La tuile comprend un trou 30 et est fixée sur une charpente ou sur des autres tuiles qui se chevauchent à l'aide d'une vis munie d'un joint traversant le dit trou. Le joint permet d'éviter que de l'eau puisse traverser ledit trou. La fixation des tuiles sur une charpente ou sur des autres tuiles est donc étanche. Dans une variante, ladite vis est munie d'une rondelle en caoutchouc. Dans une mode de réalisation de l'invention la position du trou sur la tuile peut être différente pour des tuiles superposée, de façon à ce qu'une seule vis, traversant les trous alignés desdites tuiles superposées, soit suffisante pour fixer les tuiles à la fois entre eux et à la charpente. L'usage d'une seule vis rend le montage de tuiles plus simple et garantit mieux l'étanchéité. Dans un autre mode de réalisation la possibilité d'avoir plusieurs vis au lieu d'une seule est prévue.

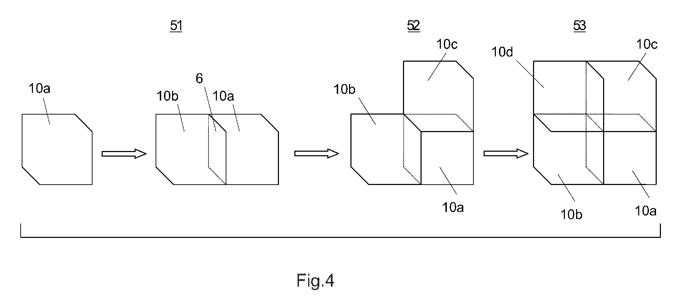

L'arrangement pour une structure de toit comprend au moins trois tuiles solaires 10b, 10c et 10d du type 10 décrit. La pose de tuiles peut se faire en vertical, horizontal ou diagonal. Pour une pose de droite à gauche on part avec une première tuile 10a en bas à droite, une deuxième tuile 10b est posée sur la première tuile 10a de façon à garantir un chevauchement 6 montré dans l'arrangement 51 de la figure 4. Le chevauchement 6 est en forme de parallélogramme. Dans un mode de réalisation de l'invention la hauteur relative à la base majeure dudit parallélogramme est de 0,04 m. Une troisième tuile 10c est alors placée en haut à droite sur le même plan de la deuxième tuile 10b de façon à ce qu'elles soient adjacentes par les petits côtés 100, 101, comme montré dans l'arrangement 52 de la figure 4. Le chevauchement de la troisième tuile 10c sur la première 10a est similaire au chevauchement 6 de l'arrangement 51. Enfin une quatrième tuile 10d est placée sur les autres trois tuiles de la façon indiquée dans l'arrangement 53 de la figure 4. Les deux chevauchements de cette quatrième tuile 10d avec la deuxième 10b et respectivement la troisième 10c sont identiques au chevauchement 6 de l'arrangement 51. Ainsi au point d'intersection des quatre tuiles, les deux tuiles dans le même plan, c'est-à-dire la tuile supérieure droite 10c et la tuile inférieure gauche 10b, se juxtaposent diagonalement.

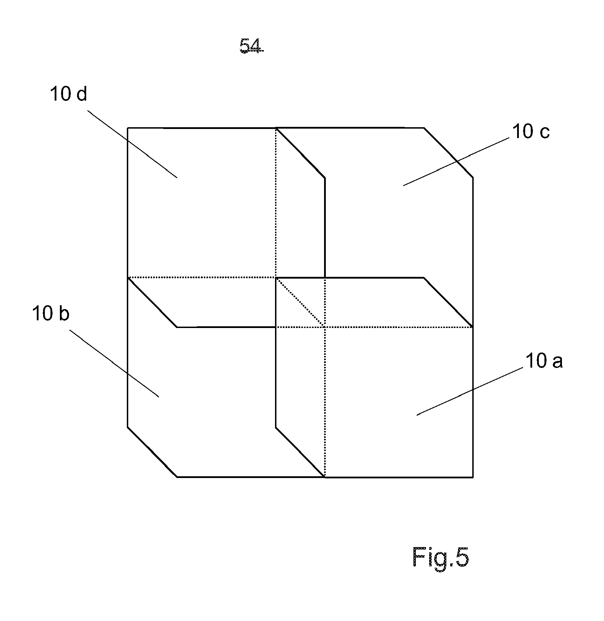

L'arrangement formé par les tuiles 10b, 10c, 10d de la figure 4 garantit l'étanchéité grâce au chevauchement entre les tuiles. Dans une autre variante, la première tuile en bas à gauche 10a peut être posée sur l'arrangement formé par les tuiles 10b, 10c, 10d, comme montré dans la figure 5.

Dans une autre variante, pour une pose de droite à gauche les angles rognés de la tuile seront en bas à droite et en haut à gauche et la première tuile est posée en bas à gauche.

Dans une variante, une rondelle circulaire, réalisée par exemple en caoutchouc ou en plastique, recouvre chaque zone d'intersection de quatre tuiles. La face inférieure de cette rondelle comprend quatre segments, délimités par deux diamètres perpendiculaires du cercle, de hauteur variable de façon à ce que chaque segment soit en contact avec une des quatre tuiles, qui comme on l'a vu sont déposées sur trois plans différents.

La rondelle est aussi munie d'un ou plusieurs trous qui permettent le passage de la vis ou des vis qui fixent la ou les tuiles à la charpente ou à une autre tuile, ce trou étant coaxial au trou traversant la tuile. La rondelle permet de tenir ensemble lesdites quatre tuiles. En outre, puisqu'elle est de préférence réalisée en un matériau compressible et qui peut se déformer, la rondelle garantit aussi l'étanchéité au point d'intersection des quatre tuiles.

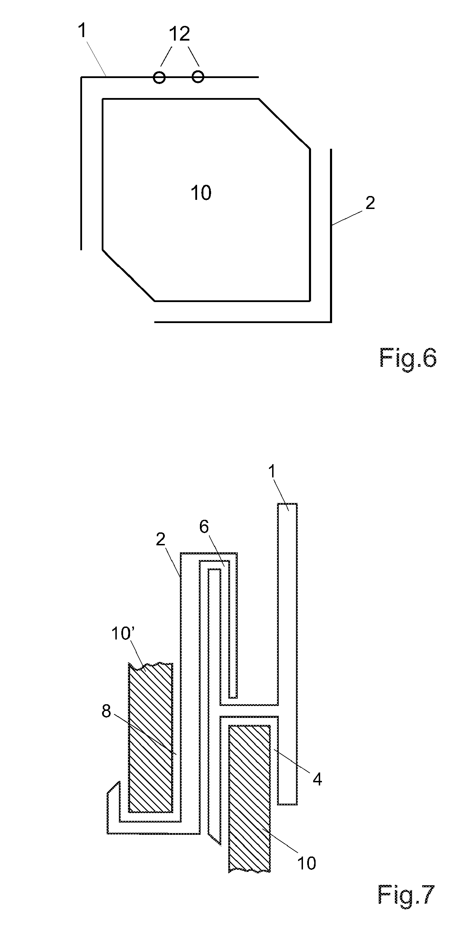

Dans une autre variante illustrée sur la figure 6, la tuile 10 selon l'invention est munie de deux cadres 1 et 2 s'étendant le long des quatre bords autres que les petits bords provenant du coin rogné. Chacun des deux cadres 1, 2 est en une forme de L et est donc composé par deux parties sensiblement perpendiculaires. Dans ce contexte ces deux parties seront désignées par les expressions « partie horizontale » et « partie verticale », où les adjectives « horizontale » et « verticale » se référent à la direction parallèle aux lignes horizontales respectivement verticales de la figure 6. Le cadre 2 est fixé sur la surface de la tuile la plus proche du toit, le cadre 1 est fixé sur l'autre surface de la tuile, c'est-à-dire la surface distale du toit. Les cadres 1 et 2 sont fixés à la tuile à l'aide d'une colle, par exemple une colle silicone, qui garantit aussi l'étanchéité. Cette dernière peut être améliorée à l'aide de joints.

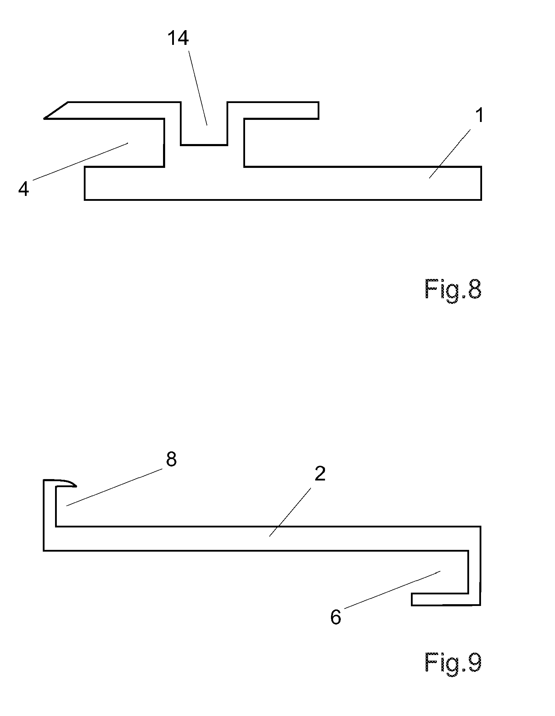

La figure 7 illustre une vue de section de deux tuiles 10 superposées à l'aide du premier cadre 1 et du deuxième cadre 2. Le cadre 1 possède une section ou profil sensiblement en forme de « H », la section ou le profil du cadre 2 est sensiblement en forme de « S » ou de « Z ». Les cadres 1 et 2 peuvent être réalisés en métal, par exemple en inox ou en aluminium. Le premier cadre 1 comprend des trous 12 pour le fixer à l'aide des vis à la charpente ou à d'autres tuiles. Une tuile 10 est engagée, par exemple collée, dans une gorge latérale dans le profil du premier cadre 4, illustré sur la figure 7. Comme illustré sur la figure 8, le premier cadre 1 en H peut être doté d'une dépression 14. Dans une variante un ou plusieurs joints sont logés dans cette dépression 14 pour améliorer l'étanchéité de l'assemblage des tuiles selon l'invention.

Le deuxième cadre est doté de deux gorges 6 et 8, visibles aussi sur la figure 8. Une partie du premier cadre 1 s'emboite dans la première gorge 6 et une autre tuile 10' dans la deuxième gorge 8. Dans ce cas aussi la tuile 10' peut être collée au cadre 2 à l'aide d'une colle qui garantit aussi l'étanchéité, par exemple une colle silicone. Dans une autre variante l'étanchéité est garantie aussi par un ou plusieurs joints non illustrés entre la tuile 10' et le deuxième cadre 2.

L'utilisation de ces deux cadres 1 et 2 permet d'adapter un arrangement pour une structure de toit composé par des tuiles 10 ayant chacune un premier cadre 1 et un deuxième cadre 2, à des toits qui ne sont par parfaitement plats et qui peuvent présenter des dos d'âne. La jambe du premier cadre 1 engagée dans la gorge 6 du deuxième cadre 2 peut en effet s'articuler dans cette gorge, de façon à permettre un montage de la tuile supérieure 10' non parfaitement parallèle à la tuile inférieure 10. L'étanchéité de l'arrangement est garantie par l'utilisation d'une colle silicone ou d'un ou plusieurs joints. En outre cet arrangement garanti une certaine inclinaison, puisque la tuile 10' est dans un plan supérieur par rapport à celui de la première et décalée par rapport à elle, ce qui permet à l'eau de couler sans entrer dans les interstices entre les deux cadres.

Si la tuile selon l'invention est dotée de cadres 1 et 2, la présence du trou 30 n'est plus nécessaire.

La pose de tuiles dotées de cadres 1 et 2 peut se faire en vertical, horizontal ou diagonal. Les figures 4 et 5 sont considérées aussi dans ce cas comme figures de référence.

Un premier profil de base horizontal sensiblement en forme de H est fixé sur la charpente, par exemple à l'aide des vis. Dans une variante la longueur de ce profil est inférieure à la longueur d'un des quatre bords autres que les petits bords de la tuile, mais néanmoins suffisamment importante pour permettre de poser provisoirement la tuile sans qu'elle ne risque de basculer d'un côté ou l'autre. Pour une pose de droite à gauche une première tuile 10a est déplacée parallèlement au toit selon une direction vertical vers le bas, jusqu'à quand la partie horizontale de son profil en Z s'emboite dans le profil de base de la charpente. La partie horizontale de son profil en H est donc vissée à la charpente.

Un deuxième profil de base horizontal sensiblement en forme de H, aligné avec le premier, est ensuite vissé à la charpente à la gauche de la première tuile 10a. Dans une variante la longueur de ce deuxième profil de base est inférieure à celle du premier profil, ce qui facilite l'emboîtage. Une deuxième tuile 10b est alors déplacée parallèlement au toit vers le bas, jusqu'à ce que la partie verticale de son profil en Z s'emboite dans la partie verticale du profil en H de la première tuile 10a. La deuxième tuile 10b est ensuite déplacée vers la droite de la figure, c'est-à-dire vers la première tuile 10a, par glissement de la partie horizontale du profil en Z de la deuxième tuile sur le deuxième profil de base vissé à la charpente. Le déplacement s'arrête quand un certain chevauchement entre les tuiles 10a et 10b, lié à la dimension des petits bords provenant du coin rogné, est obtenu. La partie horizontale du profil en H de la tuile 10b est alors vissée à la charpente.

Une troisième tuile 10c en haut à droite est alors déplacée vers le bas dans le même plan de la deuxième tuile 10b de façon à ce qu'elles soient adjacentes par les petits côtés. La partie horizontale de son profile en Z s'emboite donc dans la partie horizontale du profil en H de la première tuile 10a. Le chevauchement de la troisième tuile 10c sur la première 10a est similaire au chevauchement entre la première tuile 10a et la deuxième 10b. La partie horizontale du profil en H de la tuile 10c est donc vissée à la charpente.

Enfin une quatrième tuile 10d en haut à gauche est déplacée vers le bas et après vers droite, de la même façon que la deuxième tuile 10b. Les deux chevauchements de cette quatrième tuile 10d avec la deuxième 10b et respectivement la troisième 10c sont identiques aux chevauchements précédents.

Dans une autre variante la tuile 10c est posée avant la tuile 10b. D'autres variantes de pose des tuiles selon l'invention, par exemple en partant par une tuile en bas à gauche ou en haut (à droite ou à gauche) sont possibles.

Les tuiles peuvent être tournées pendant la phase de pose selon la direction du vent pour permettre à l'eau de mieux s'écouler sans passer sous les tuiles.

Sur toit recouvert par un arrangement de tuiles dotées chacune de cadres 1 et 2, ces cadres 1 et 2 ne sont plus visibles, puisque les premiers cadres 1 sont recouverts par d'autres tuiles et les deuxièmes cadres 2 sont sur les surfaces des tuiles proches du toit.

### Liste des symboles de référence utilisés sur les figures

- 1: Premier cadre
- 2: Deuxième cadre
- 4: Gorge latérale dans le premier cadre
- 6: Première gorge du deuxième cadre
- 8: Deuxième gorge du deuxième cadre
- 10, 10': Tuile
- 12: Trou de fixation à travers le premier cadre
- 14: Gorge sur la face supérieure du premier cadre
- 100,101: Petits bords provenant du coin rogné
- 2: Capteur solaire
- 20: Boitîer
- 21: Fils de connexion électrique
- 30: Trou
- 31: Joint
- 40: Eléments de connexion électrique mâles
- 41: Eléments de connexion électrique femelles
- 10a: Tuile 1
- 10b: Tuile 2
- 10c: Tuile 3
- 10d: Tuile 4
- 51: Arrangement 1
- 52: Arrangement 2
- 53: Arrangement 3
- 54: Arrangement 4
- 6: Chevauchement

## Revendications

1. Tuile plate ayant une forme hexagonale (10) pour une structure de toit comprenant un capteur solaire (2), **caractérisée en ce que** ladite forme est obtenue à partir d'un rectangle avec deux coins opposés (100, 101) rognés de la même façon.

2. Tuile selon la revendication 1, **caractérisée en ce que** ladite forme est obtenue à partir d'un carré dont deux coins opposés sont rognés de la même façon.

3. Tuile selon l'une des revendications 1 ou 2, dans laquelle ledit capteur solaire est photovoltaïque ou thermique.

4. Tuile selon la revendication 3, dans laquelle ledit capteur solaire comprend un boîtier (20) placé sur la surface inférieure de ladite tuile,
permettant une connexion électrique aux boîtiers des tuiles adjacentes au moyen de fils électriques (21).

5. Tuile selon l'une des revendications précédentes, comprenant un trou (30) et une vis traversant ledit trou munie d'un joint.

6. Tuile selon l'une des revendications précédentes, munie d'un joint (31) en forme d'une « L » ou circulaire sur la surface inférieure de ladite tuile.

7. Tuile selon une des revendications précédentes, comprenant des éléments de connexion électrique mâles (40) sur la surface supérieure et femelles (41) sur la surface inférieure de ladite tuile.

8. Arrangement pour une structure de toit, comprenant au moins trois tuiles (10b, 10c et 10d) selon l'une des revendications 1 à 7, **caractérisé en ce que** les chevauchements desdites tuiles garantissent l'étanchéité pour ledit toit.

9. Arrangement selon la revendication 8, dans lequel deux tuiles (10b, 10c) dans un même plan sont adjacentes par des petits côtés (100, 101), la partie adjacente étant recouverte par une partie d'une tuile (10d) dans un plan supérieur.

10. Arrangement selon la revendication 9, dans lequel une partie d'une tuile (10a) dans un plan inférieur par rapport au plan de deux tuiles (10b, 10c) adjacentes par les petits cotés (100, 101) est recouverte par la partie adjacente deux dites tuiles (10b, 10c).

11. Arrangement selon la revendication 9 dans lequel une partie de deux dites tuiles (10b, 10c) adjacentes par les petits côtés (100, 101) et une partie d'une tuile (10d) dans un plan supérieur sont recouvertes par une tuile (10a) dans un plan au-dessus dudit plan supérieur.

12. Arrangement selon l'une des revendications 10 à 11, comprenant une rondelle circulaires comprenant des segments de hauteur variable sur une des ses faces, recouvrant la zone d'intersection entre quatre tuiles et comprenant un ou plusieurs trous de passage pour une ou plusieurs vis.

13. Arrangement selon l'une des revendications 8 à 12, comprenant pour chaque tuile (10) un premier cadre (1) avec un profil sensiblement en forme de H et un deuxième cadre (2) avec un profil sensiblement en forme de S, lesdits cadres (1, 2) bordant les quatre bords de la tuile (10) autres que les petits côtés (100, 101) provenant du coin rogné.

14. Arrangement selon la revendication 13, dans lequel ledit premier cadre (1) comprend :
des trous de fixation pour le fixer sur ledit toit ;
une gorge latérale (4) pour loger une tuile (10) fixée dans ladite gorge à l'aide d'une colle silicone et/ou d'un joint.

15. Arrangement selon la revendication 14, ledit deuxième cadre (2) comprenant deux gorges (6, 8), une partie dudit premier cadre (1) étant emboîtée dans la première gorge (6) et une autre tuile (10') dans la deuxième gorge (8), ladite autre tuile (10') étant liée audit deuxième cadre (2) à l'aide d'une colle silicone et/ou d'un joint.
